# EUROPEAN PATENT SPECIFICATION

(11) **EP 2 518 904 B1**
(45) Date of publication and mention of the grant of the patent: **19.06.2019**
(21) Application number: 11275141.7
(22) Date of filing: 10.11.2011
(51) Int. Cl.: H04B 5/00

(54) **Contactless power transmission device**
Vorrichtung zur kontaktlosen Leistungsübertragung
Dispositif de transmission de puissance sans contact

(30) Priority: 27.04.2011 KR 20110039297; 10.08.2011 KR 20110079697
(43) Date of publication of application: 31.10.2012
(73) Proprietor: Samsung Electro-Mechanics Co., Ltd, Suwon, Gyunggi-Do (KR)
(72) Inventor: Sung, Jae Suk, Gyunggi-do (KR); Chang Mok, Han, Gyunggid-do (KR); An, Chan Gwang, Gyunggi-do (KR); Lim, Dae Ki, Gyunggi-do (KR); Chang, Ki Won, Gyunggi-do (KR); Nam, Hyeon Gil, Gyunggi-do (KR); Bae, Sang Woo, Gyunggi-do (KR); Sung Eun, Cho, Gyunggid-do (KR); Kim, Tae Sung, Seoul (KR); Dae Seong, Jeon, Gyunggid-do (KR)
(74) Representative: Potter Clarkson

(56) References cited:
- WO-A1-2010/122888
- WO-A1-2011/002049
- JP-A- 2009 284 657
- US-A1- 2008 164 840

## Description

### CROSS-REFERENCE TO RELATED APPLICATIONS

This application claims the priority of Korean Patent Application Nos. 10-2011-0039297 filed on April 27, 2011 and 10-2011-0079697 filed on August 10, 2011, in the Korean Intellectual Property Office.

### BACKGROUND OF THE INVENTION

### Field of the Invention

The present invention relates to a contactless power transmission device capable of wirelessly transmitting power by using electromagnetic induction, and an electronic device having the same.

### Description of the Related Art

Research into a system for wirelessly, that is, contactlessly, transmitting power in order to charge a secondary battery embedded in a portable terminal, or the like, has recently been conducted.

A contactless power transmission device generally includes a contactless power transmitter transmitting power and a contactless power receiver receiving and storing the power therein.

The contactless power transmission device transmits and receives the power by using electromagnetic induction. To this end, each of the contactless power transmitter and contactless power receiver includes a coil provided in an inner portion thereof.

In particular, a contactless power receiver configured of a circuit part and a coil part is attached to a cellular phone case or an additional cradle-shaped accessory structure.

Each of the circuit part and the coil part, made of different materials and having different shapes, is attached to a case of a mobile communications module such as a case of a cellular phone terminal, or the like, or is mounted therein, and both are connected to each other through a process such as a soldering process for contactless charging.

In this case, different kinds of components, each having a substantial thickness, are connected to each other, such that a thickness of the cellular phone terminal increases, and a process of connecting the circuit part and the coil part to each other is added, such that a process cost increases and a manufacturing process is complicated.

Meanwhile, according to the related art, the coil part of the contactless power transmission device is wound in parallel with a bottom surface (that is, an external contact surface) . In addition, the coil is fixed to the bottom surface by an adhesive, an adhesive sheet, or the like.

In the case of the contactless power transmission device according to the related art, a coil having a general wire form is used, such that when the coil is wound, it is overlapped and stacked. Therefore, the thickness of the contactless power transmission device may be increased due to the thickness of the coil, the amount of turns thereof, and the like.

Therefore, in accordance with the recent trend towards thin devices, there is a need to develop a contactless power transmission device having a reduced thickness.

In addition, in the case of the contactless power transmission device according to the related art, since a coil having the form of a single line is mainly used, an alternating current (AC) resistance value may increase due to an eddy current, a skin effect, or the like, at a low frequency, such that loss may occur.

JP 2009 284657 A discloses an electronic device including a first electronic circuit board, a second electronic circuit board, a first coil connected to the first electronic circuit board, and a second coil connected to the second electronic circuit board. Power is fed from the first coil to the second coil by electromagnetic induction so as to electrically connect between the first electronic circuit board and the second electronic circuit board.

WO 2010/122888 A1 discloses an antenna apparatus comprising a coil conductor having a loop shape or a spiral shape in which a winding center portion serves as a coil opening, and a conductor layer that is arranged on a side closer to an antenna on a communication partner side as compared to the coil conductor. The conductor layer includes a conductor opening and a slit. The slit connects the conductor opening and an outer edge of the conductor layer. When the coil conductor is viewed in plan view, the coil conductor and conductor layer are superposed one on top of the other.

US 2008/164840 A1 discloses a non-contact power transmission coil is provided. The non-contact power transmission coil includes a planar coil and a printed circuit board. The planar coil is formed by spirally winding a linear conductor made of a single or twisted wire in a substantially same plane. The printed circuit board includes a first external connection terminal portion, a second external connection terminal portion, a first contact portion connected to an inner peripheral end of the spirally-wound linear conductor, a second contact portion connected to the outer peripheral end of the spirally-wound linear conductor, a first conductor pattern connecting the first contact portion to a first external connection terminal portion, and a second conductor pattern connecting the second contact portion to a second external connection terminal portion. One planar portion of the planar coil is attached on the surface of the flexible printed circuit board.

### SUMMARY OF THE INVENTION

An aspect of the present invention provides a contactless power transmission device having a reduced thickness and an electronic device having the same.

Another aspect of the present invention provides a contactless power transmission device capable of having a minimized thickness by using a thin coil part and an electronic device having the same.

Another aspect of the present invention provides a contactless power transmission device capable of being mounted in an electronic device using a simple method by forming a circuit part and a coil part integrally with each other, and an electronic device having a high degree of spatial freedom in a case by including an integrally formed and slim contactless power transmission device.

Another aspect of the present invention provides a contactless power transmission device capable of minimizing loss generated due to an eddy current, a skin effect, or the like, at a low frequency, and an electronic device having the same.

According to an aspect of the present invention, there is provided a contactless power transmission device including: a flexible substrate; a coil unit including a coil part formed to have a wiring pattern form and having a plurality of coil strands connected in parallel with each other to thereby form a single coil pattern; and characterised in that the contactless power transmission device further comprises: a circuit unit electrically connected to the coil unit and processing power received through the coil unit, wherein the coil unit and the circuit unit are integrally formed in the flexible substrate; wherein the plurality of coil strands are formed on one surface of the substrate, and wherein each of the coil strands are disposed to be spaced apart from other coil strands at predetermined intervals.

The flexible substrate may be a film type or thin type printed circuit board.

The flexible substrate may be a polyimide type flexible printed circuit board (FPCB) or a frame retardant 4 (FR-4) type printed circuit board.

The coil unit may further include a plate-shaped magnetic part having a magnetic path formed therein and having the coil pattern attached to one surface thereof.

The magnetic part may include a ferrite sheet.

The contactless power transmission device may further include an adhesion part interposed between the magnetic part and the coil part to thereby adhere the magnetic part and the coil part to each other.

The coil part may have the plurality of coil strands disposed in parallel lines to thereby form the coil pattern.

The coil unit may include the coil pattern formed on at least one or both surfaces of the flexible substrate, and the coil pattern may include contact pads formed at both ends thereof so as to be electrically connected to the circuit unit.

The circuit unit may include exposed pads formed therein so as to be electrically connected to a battery.

The coil part may include the coil strands each formed to have the same shape on both surfaces of the flexible substrate.

The flexible substrate may include conductive vias formed at positions at which ends of the coil strands are disposed, and the coil strands formed on both surfaces of the flexible substrate may be electrically connected to each other by the conductive vias.

The coil part may include the coil pattern wound fifteen times on the flexible substrate having a size of 30 mm × 40 mm.

The coil part may include the coil strands each having a width of 0.5 mm or more and a thickness of 36 µm or more.

The coil part may have an inductance of 14 µH or more and a resistance of 0.98 Ω or less, at a frequency of 125 kHz.

According to another aspect of the present invention, there is provided an electronic device including: the contactless power transmission device as described above; and a case receiving the contactless power transmission device therein.

The contactless power transmission device may be directly attached to an inner portion of the case or may be disposed to be maximally adjacent thereto.

The contactless power transmission device may be attached to the inner portion of the case using an adhesive or a double sided tape.

The electronic device may further include an antenna module including an antenna pattern enclosing the coil pattern of the contactless power transmission device.

The antenna module may be attached to the case, together with the contactless power transmission device.

The antenna pattern may be an in-mold antenna (IMA).

The contactless power transmission device may use a frequency in a 1 kHz to 100 MHz band, and the antenna module may use a frequency in a 10 kHz to 5 GHz band.

The case may be an outer case frame or a battery case frame.

The electronic device may further include a battery storing power generated in the contactless power transmission device.

### BRIEF DESCRIPTION OF THE DRAWINGS

The above and other aspects, features and other advantages of the present invention will be more clearly understood from the following detailed description taken in conjunction with the accompanying drawings, in which:
FIG. 1 is a perspective view schematically showing an electronic device and a charging device according to an embodiment of the present invention;
FIG. 2 is a cross-sectional view taken along line A-A' of FIG. 1;
FIG. 3 is a perspective view of a contactless power receiver according to an embodiment of the present invention;
FIG. 4 is an exploded perspective view schematically showing a coil unit of a contactless power receiver according to a first embodiment of the present invention;
FIG. 5 is a perspective view showing a coil unit of a contactless power receiver according to a second embodiment of the present invention;
FIG. 6 is a cross-sectional view taken along line C-C' of FIG. 5;
FIGS. 7A and 7B are, respectively, a perspective view and a cross-sectional view schematically showing an electronic device including a contactless power receiver and an antenna module accoridng to an embodiment of the present invention; and
FIGS. 8A and 8B are, respectively, a perspective view and a cross-sectional view schemactically showing an electronic device including a contactless power receiver and an antenna module accoridng to another embodiment of the present invention.

### DETAILED DESCRIPTION OF THE PREFERRED EMBODIMENT

Terms and words used in the specification and claims should not be interpreted as being limited to typical meanings or dictionary definitions, but should be interpreted as having meanings and concepts relevant to the technical scope of the present invention based on the rule according to which an inventor can appropriately define the concept of the term to describe most appropriately the best method he or she knows for carrying out the invention. Therefore, the configurations described in the embodiments and drawings of the present invention are merely the most preferable embodiments, but do not represent all of the technical spirit of the present invention. Thus, the present invention should be construed as including all changes, equivalents, and substitutions included in the scope of the present invention at the time of the filing of this application.

Hereinafter, embodiments of the present invention will be described in detail with reference to the accompanying drawings. At this time, it is noted that like reference numerals denote like elements in appreciating the drawings. Moreover, detailed descriptions related to well-known functions or configurations will be ruled out in order not to unnecessarily obscure the subject matter of the present invention. For the same reason, it is to be noted that some components shown in the drawings are exaggerated, omitted or schematically illustrated, and the size of each component does not exactly reflect its actual size.

Hereinafter, embodiments of the present invention will be described in detail with reference to the accompanying drawings. Meanwhile, in describing the embodiments of the invention, a contactless power transmission device generally includes a contactless power transmitter transmitting power and a contactless power receiver receiving and storing the power therein.

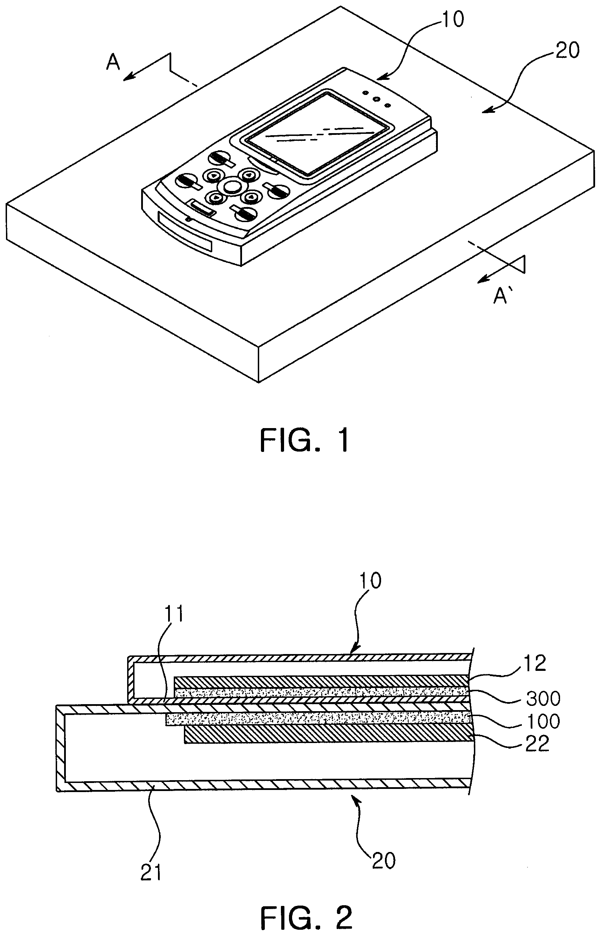

FIG. 1 is a perspective view schematically showing an electronic device and a charging device according to an embodiment of the present invention; and FIG. 2 is a cross-sectional view taken along line A-A' of FIG. 1.

Referring to FIGS. 1 and 2, an electronic device 10 according to the present embodiment may include a battery 12 and a contactless power receiver 300 supplying power to the battery 12 to thereby charge the battery 12.

The battery 12 may be a secondary battery capable of being charged and discharged, and may be attached to and detached from the electronic device 10.

The contactless power receiver 300 may be received in a case 11 of the electronic device 10 to thereby be directly attached to an inner surface of the case 11 or be disposed to be maximally adjacent thereto.

In addition, a charging device 20 according to the present embodiment is provided in order to charge the battery 12 of the electronic device 10. To this end, the charging device 20 may include a contactless power transmitter 100 provided in a case 21.

The charging device 20 converts household alternating current (AC) power supplied from the outside into direct current (DC) power and again converts the DC power into AC voltage having a predetermined frequency to thereby provide the AC voltage to the contactless power transmitter 100. To this end, the charging device 20 may include a voltage converter 22 converting the household AC power into the AC voltage having a predetermined frequency.

When the above-mentioned AC voltage is applied to a coil part of the contactless power transmitter 100, a magnetic field in the vicinity of the coil part changes. Therefore, the contactless power receiver 300 of the electronic device 10 disposed to be adjacent to the contactless power transmitter 100 has voltage applied thereto according to a change in magnetic field, such that the battery 12 is charged.

Hereinafter, the contactless power receiver 300 included in the above-mentioned electronic device 10 will be described in detail.

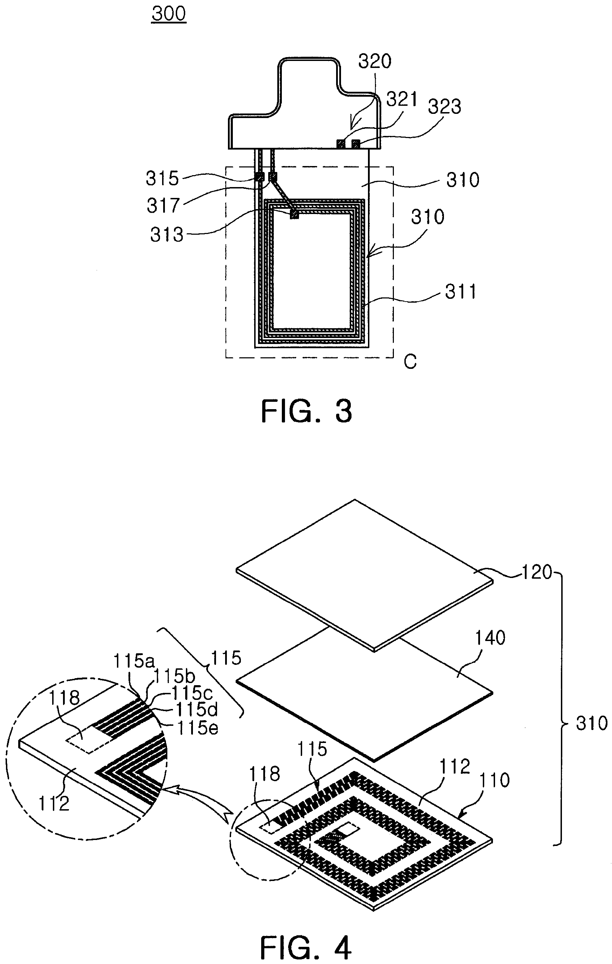

FIG. 3 is a perspective view of a contactless power receiver according to an embodiment of the present invention. A contactless power receiver 300 according to an embodiment of the present invention includes a coil unit 310 and a circuit unit 320.

The coil unit 310 and the circuit unit 320 may be integrally formed in a flexible substrate.

The flexible substrate is a thin film substrate including the coil unit 310 and the circuit unit 320 formed thereon. As for the flexible substrate, a flexible printed circuit board (FPCB) may be used.

The flexible substrate according to the embodiment of the present invention may be any substrate such as a film type printed circuit board, a thin type printed circuit board, or the like as long as it has a thin thickness and includes a wiring pattern formed thereon. The coil unit and the circuit unit may also be implemented on a flexible printed circuit board made of polyimide or a frame retardant 4 (FR-4) type printed circuit board, without being limited thereto. In the case that a printed circuit board made of an FR-4 material is used, costs may be further reduced.

According to the embodiment of the present invention, coil patterns and circuit patterns that have desired shapes may be formed on the flexible substrate using several methods such as an etching method, a lithography method, a printing method, a deposition method, or the like. In addition, components for wireless charging are mounted on the flexible substrate having the circuit patterns and the coil patterns formed thereon using a surface mounting technology (SMT), whereby the coil unit and the circuit unit may be implemented on a single flexible substrate.

According to the embodiment of the present invention, the coil unit and the circuit unit are configured on a single flexible substrate, whereby the contactless power receiver may be significantly slim. In addition, the contactless power receiver is attached to a structure such as a case of a cellular phone using a simple attachment method such as the use of double sided tape, whereby a manufacturing cost and a process cost may be reduced.

In addition, since the contactless power receiver is implemented on the flexible substrate, it may be simply attached even to an eletronic device having a curved shape. Therefore, the contactless power transmission device may be flexibly applied.

According to the embodiment of the present invention, both the coil unit 310 and the circuit unit 320 maybe implemented on a single flexible substrate. Therefore, the contactless power receiver 300 including the coil unit 310 and the circuit unit 320 may be provided without performing a separate bonding process between the coil unit 310 and the circuit unit 320.

The coil unit 310 and the circuit unit 320 may be connected to each other by first and second contact pads 315 and 317. When a connection terminal is formed at an inner portion of a flat coil, the coil unit 310 may be electrically connected to the circuit unit 320 in a scheme in which the coil unit is connected to the second contact pad 317 through a third contact pad 313 formed at the inner portion without being limited thereto.

According to the embodiment of the present invention, the circuit unit 320 may include first and second exposed pads 321 and 323 formed therein. Therefore, power received through the coil unit 310 may be processed through the circuit unit 320 and be then connected to a battery (not shown) through the first and second exposed pads 321 and 323.

In the contactless power receiver 300 according to the embodiment of the present invention, the coil unit 310 and the circuit unit 320 may be integrally formed on the flexible substrate. Therefore, the contactless power receiver 300 may be simply implemented in the electronic device 10 using only a process of attaching the contactless power receiver 300 to the case in which the contactless power receiver 300 is to be received or mounting the contactless power receiver 300 in the case.

According to the embodiment of the present invention, since the flexible substrate only needs to be mounted in the case without performing a separate connection process between the coil unit 310 and the circuit unit 320, a manufacturing process of the electronic device may be simplified. In addition, since the coil unit 310 and the circuit unit 320 are provided in a state in which they are processed, are connected to each other on the flexible substrate, movement and conveyance of a product is facilitated and precision in the manufacturing thereof increases.

FIG. 4 is an exploded perspective view of part C, which shows the coil unit 310 of FIG. 3.

Referring to FIG. 4, the coil unit 310 of the contactless power receiver includes a coil part 110 and a magnetic part 120.

The coil part 110 may include a substrate 112 and a coil pattern 115 formed on the substrate 112.

The substrate 112 of the coil part 110 according to the present embodiment may be a thin film substrate, for example, a flexible substrate. In addition, according to the embodiment of the present invention, the circuit unit 320 may be mounted, together with the coil part 110, on the flexible substrate on which the coil part 110 is mounted. The circuit unit 320 and the coil unit 310 may be mounted and provided integrally with each other on the flexible substrate.

The coil pattern 115 may be formed to have a wiring pattern form on at least one surface of the substrate 112. The coil pattern 115 according to the present embodiment has a vortex shape on a plane formed by the substrate 112 and includes contact pads 118 formed at both ends thereof so as to electrically connect the coil pattern 115 to the outside.

Although the embodiment of FIG. 4 discloses two contact pads, that is, that first and second contact pads are formed at both ends of flat coil of the coil pattern 115, the first and second contact pads are not necessarily limited to the above-mentioned configuration. For example, any one of the first and second contact pads may be formed to traverse another contact pad, such that the first and second contact pads may lead to the same side of the coil pattern 115.

Here, a top perspective view of the coil part 110 illustrated up to the coil pattern 115 and the contact pads 118 formed on a lower surface of the substrate 112 is shown in FIG. 4. In addition, the contact pads 118 are connected to the circuit unit 320 through the wiring pattern.

The coil pattern 115 according to the present embodiment includes a plurality of coil strands 115a to 115e disposed in parallel with each other. Here, all of the plurality of coil strands 115a to 115e are electrically connected to the same contact pad 118. Therefore, the coil strands 115a to 115e are connected in parallel with each other to thereby form a single coil pattern 115.

The present embodiment describes a case in which the coil pattern 115 formed on one surface of the substrate 112 includes the five coil strands 115a to 115e, by way of example. In this case, each of the coil strands 115a to 115e of the coil pattern 115 is disposed to be spaced apart from other coil strands at predetermined intervals in parallel therewith.

The present embodiment describes a case in which the coil pattern 115 has a generally rectangular vortex shape, by way of example; however, the coil pattern 115 of the present invention is not limited thereto but may be variously applied. For example, the coil pattern 115 may have a circular vortex shape, a polygonal vortex shape, or the like.

The coil pattern 115 may include an insulating protective layer (for example, a resin insulating layer (not shown)) formed on an upper portion thereof, as needed, such that the insulating protective layer protects the coil pattern 115 from the outside.

The magnetic part 120 has a flat plate shape (or a sheet shape), is disposed on one surface of the coil part 110, and is fixedly attached to the coil part 110. The magnetic part 120 is provided in order to efficiently form a magnetic path of a magnetic field generated by the coil pattern 115. To this end, the magnetic part 120 may be made of a material through which a magnetic path may be easily formed, and more specifically, be formed of a ferrite sheet.

However, the magnetic part 120 according to the present embodiment is not limited to the above-mentioned configuration but may be variously applied. For example, the magnetic part 120 may be formed by applying ferrite powder or a magnetic solution to one surface of the coil part 110.

Meanwhile, although not shown, the magnetic part 120 may include a metal sheet added to an outer surface thereof, as needed, such that the metal sheet shields electromagnetic waves or leakage flux. The metal sheet may be made of aluminum, or the like; however, a material of the metal sheet is not limited thereto.

In addition, an adhesion part 140 may be interposed between the coil part 110 and the magnetic part 120 so that the coil part 110 and the magnetic part 120 of the coil unit 310 of the contactless power receiver 300 according to the present embodiment are firmly and fixedly adhered to each other.

The adhesion part 140 is disposed between the substrate 112 and the magnetic part 120 and adheres the magnetic part 120 and the coil part 110 to each other. The adhesion part 140 may be formed of an adhesive sheet or an adhesive tape or be formed by applying an adhesive or a resin having adhesive properties to a surface of the substrate 112 or the magnetic part 120. Here, the adhesion part 140 contains ferrite powder, whereby the adhesion part 140 may have magnetism together with the magnetic part.

According to the embodiment of the present invention, the circuit unit 320 may be formed on the flexible substrate on which the coil part 110 is formed. That is, a circuit for contactless power reception is implemented, together with the coil part 110, on the flexible substrate on which the coil part 110 is formed, such that the circuit unit 320 and the coil unit 310 may be formed on the flexible substrate. The circuit unit 320 may be electrically connected to the battery 12 of the electronic device 10 and be electrically connected to the coil unit 310.

According to the embodiment of the present invention, the battery 12 of the electronic device 10 and the contactless power receiver may be electrically connected to each other through the first and second exposed pads 321 and 323, and the coil unit 310 and the circuit unit 320 may be electrically connected to each other through the first and second contact pads 315 and 317.

The first and second exposed pads 321 and 323 and the first to third contact pads 315, 317, and 313 according to the embodiment of the present invention may be connected to each other in varous schemes. For example, the first and second exposed pads 321 and 323 may be electrically connected to each other using a separate wire. The first and second contact pads 315 and 317 may connect the coil unit and the circuit unit to each other by forming a wiring pattern on the flexible substrate.

In addition, the second and third contact pads 317 and 313 may be connected to each other through a wiring pattern formed on the coil pattern. In this case, the insulating protective layer may be formed on a surface of the coil pattern, and the wiring pattern is formed on the insulating protective layer. In addition, a protective layer may be further formed on the wiring pattern in order to protect the wiring pattern. Therefore, the third contact pad 313 may be connected to the second contact pad 317 while traversing the coil pattern.

The contactless power receiver 300 according to the present embodiment uses the coil pattern 115 formed on the thin flexible substrate 112 instead of using a coil in a wire form as in the case according to the related art, whereby the coil part 110 may have a greatly reduced thickness.

In addition, the coil part 110 according to the present embodiment includes a single coil pattern 115 formed by the plurality of coil strands 115a to 115e connected in parallel with each other. Therefore, the coil pattern 115 according to the present embodiment is formed in a pattern form on the substrate 112; however, an effect of using a coil in a twisted pair wire form (for example, Litz wire) formed by twisting several strands of electrical wires may be induced.

In the case of using the coil in the twisted pair form as described above, loss (for example, loss of an AC resistance value, or the like), generated due to an eddy current, a skin effect, or the like at a low frequency, may be minimized.

As described above, in the coil unit of the contactless power receiver 300 according to the present embodiment, even if the coil pattern 115 is formed in the twisted wire form, the thickness of the coil part 110 may be minimized (for example, may be 0.1 mm or less), whereby the entire thickness of the contactless power receiver 300 may be reduced.

The above-mentioned configuration of the contactless power receiver 300 may be equally applied to the contactless power transmitter 100 included in the charging device 20. Therefore, a detailed description of the contactless power transmitter 100 will be omitted.

Meanwhile, when the contactless power receiver 300 has a small size, the coil part 110 need to be designed to have a small size correspondingly. Therefore, the individual coil strands 115a to 115e need to have thinner line widths.

However, when the coil strands 115a to 115e have excessively thin line widths, a resistance value (that is loss) of the coil pattern 115 increases and an appropriate inductance value is not shown.

Therefore, when it is difficult to secure a minimum line width due to the small size of the contactless power receiver 300, a coil part 110 according to a second embodiment to be described below may be used.

A coil unit according to an embodiment to be described below has a configuration similar to that of the coil unit 310 (See FIG. 4) according to the above-mentioned embodiment and is different therefrom only in the structure of the coil part 110.

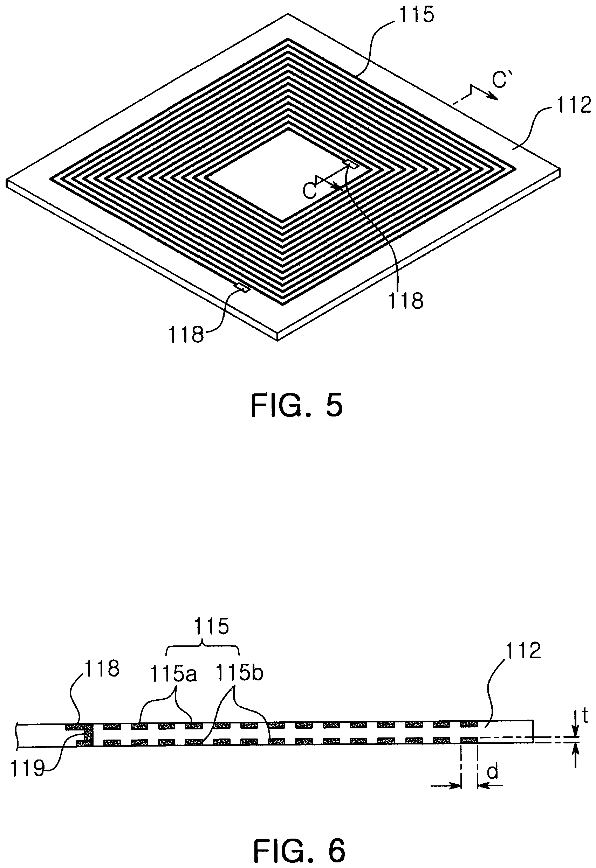

FIGS. 4 and 5 show the coil part including the square coil pattern 115 and the contact pads 118 adjacent to the coil pattern 115, while FIGS. 3, 7 and 8 show the coil part including a rectangular coil pattern 311, the first and second contact pads 315 and 317 disposed between the coil pattern 311 and the circuit unit 320, and the third contact pad 313 formed in the inner portion of the coil pattern 311 and connected to the second contact pad 317.

Therefore, the same reference numerals will be used with respect to the same components as the components described above. In addition, a detailed description of the same components as the components described above will be omitted and the structure of the coil part 110 will be described in detail.

Referring to FIGS. 5 and 6, the coil part may include the flexible substrate 112 and the coil pattern 115 formed on the flexible substrate 112, as described in the above-mentioned embodiment.

The coil pattern 115 is formed to have a wiring pattern form on both surfaces of the flexible substrate 112 and includes the contact pads 118 formed at both ends thereof so as to be electrically connected to the outside of the coil pattern 115.

The coil strands 115a and 115b formed on the respective surfaces of the flexible substrate 112 may be formed at positions corresponding to each other (that is, positions projected through the substrate) . In addition, each of the coil strands 115a and 115b may be configured of a single coil strand or a plurality of coil strands.

Both ends of each of the coil strands 115a and 115b are electrically connected to each other to thereby entirely form a parallel circuit. To this end, conductive vias 119 for electrically connecting the coil strands 115a and 115b formed on the both surfaces of the substrate 112 to each other may be formed at portions at which the both ends of the coil strands 115a and 115b are disposed.

In addition, the via 119 may have the contact pad 118 formed at one end thereof, such that the contact pad 118 is electrically connected to the outside.

Meanwhile, in the coil part 110 according to the present embodiment, the number of the coil strands 115a and 115b capable of being formed on one surface of the substrate 112 may be set according to the size of the flexible substrate 112, that is, the size of the electronic device (or the contactless power receiver).

That is, when the flexible substrate 112 has a large size, a plurality of coil strands may be formed on one surface of the flexible substrate 112, and when the flexible substrate 112 has a small size, only a single coil strand 115a or 115b may be formed on one surface of the flexible substrate 112 as in the present embodiment.

In the coil part 110 according to the present embodiment, the coil pattern 115 is wound fifteen times on the flexible substrate 112 having a size of 30 mm × 40 mm and each of the coil strands 115a and 115b has a width (d) of 0.5 mm and a thickness (t) of 36 µm. Due to this configuration, the coil part 110 according to the present embodiment has an inductance of 14 µH or more and a resistance of 0.98 Ω or less at a frequency of 125 kHz.

Here, when the width or thickness of the coil strands 115a and 115b is smaller than the above-mentioned dimension, the resistance value of the coil part increases and the inductance value thereof becomes smaller than a required value (for example, 14 µH). On the other hand, when the coil strands 115a and 115b have a width wider than 0.5 mm, the characteristics of the coil pattern 115 maybe improved; however, it is difficult to wind the coil strands 115a and 115b fifteen times on the flexible substrate 112 due to the size of the flexible substrate 112.

Therefore, the present embodiment describes a case in which only one coil strand is formed on each surface of the flexible substrate 112, by way of example. This configuration of the coil part 110 is induced in order to wirelessly, that is, contactlessly, obtain power of about 5 W in the electronic device 10 (See FIG. 1), or the like. Therefore, when the transmission power or the size of the electronic device (or the contactless power receiver) changes, the configuration of the coil part 110 may change to correspond thereto.

Meanwhile, the present embodiment describes a case in which the individual coil strands 115a and 115b formed on the respective surfaces of the flexible substrate 112 are formed at positions opposed to each other (that is, positions corresponding to each other in a vertical direction), by way of example; however, the present invention is not limited thereto. That is, various applications may be made, as needed. For example, the individual coil strands 115a and 115b formed on the respective surfaces of the flexible substrate 112 may be formed at positions off-set from each other, rather than in positions corresponding to each other.

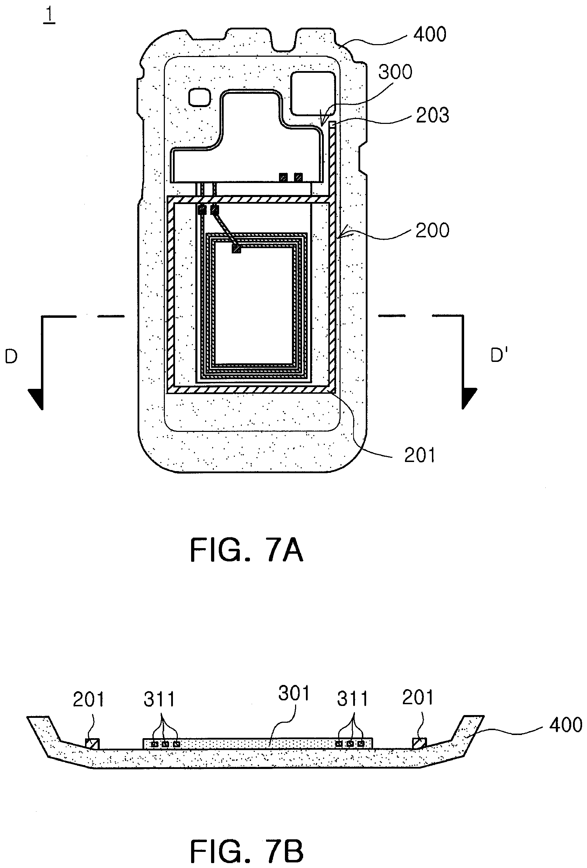

FIGS. 7A to 8B show an electronic device 1 including a contactless power receiver and an antenna according to various embodiments of the present invention.

The electronic device 1 according to the embodiment of the present invetion includes a contactless power receiver 300 and a case 400 accommodating the contactless power receiver therein.

Since the contactless power receiver 300 according to the embodiment is implemented in a film form on a flexible substrate, it may be extremely slim. In addition, the contactless power receiver 300 may be simply attached to the case 400 using a simple method such as the use of double sided tape, an adhesive, or the like.

In addition, according to the embodiment of the present invention, since the contactless power receiver 300 is implemented as a flexible flim, it may be easily attached even to the electronic device 1 having a curved shape.

When the contactless power receiver 300 and various antennas are received together in the electronic device 1, interference may occur between the contactless power receiver 300 and various antennas according to a used frequency.

Particularly, in the case of contactless power transmission, power may be transmitted in a low frequency band of 1 kHz to 100 MHz. In this case, when a low frequency is used as in a low frequency band antenna, interference may occur between the contactless power receiver and the low frequency band antenna according to a position thereof.

In accordance with miniaturization of the electronic device 1, there is a large limitation in space disposition in the electronic device 1. In addition, in order to prevent interference between the contactless power receiver and the low frequency antenna, a limitation is caused in disposition between the contactless power receiver and the low frequency antenna.

Referring to FIGS. 7A and 7B, the electronic device 1 according to the embodiment of the present invention may include the contactless power receiver 300 and an antenna module 200 including an antenna pattern 201 enclosing the coil pattern of the contactless power receiver.

The contactless power receiver 300 according to the embodiment of the present invention includes the coil unit 310 and the circuit unit 320.

In addition, the antenna module 200 according to the embodiment of the present invention includes the antenna pattern 201 and at least one connection terminal 203 connected to a circuit board corresponding thereto.

Referring to FIG. 7B, which is a cross-sectional view taken along line D-D' of FIG. 7A, the antenna pattern 201 of the antenna module 200 may enclose the coil pattern 311 of the coil unit 301 of the contactless power receiver 300. Therefore, interference between the antenna pattern 201 and the coil pattern 311 may be prevented.

According to the embodiment of the present invention, the antenna module 200 may be any one selected from a group consisting of a near field communication (NFC) antenna, a radio frequency identification (RFID) antennna, a frequency modulation (FM) antenna, and a digital multimedia boradcasting (DMB) antenna. However, the antenna module is not necessarily limited thereto but may be various kinds of antennas.

According to the embodiment of the present invention, since the coil pattern uses a frequency in a 1 kHz to 100 MHz band, when the disposition of the coil pattern and the antenna pattern according to the embodiment of the present invention is applied to the NFC antenna or the RFID antenna using a frequency in a 10 kHz to 5 GHz band, frequency reception efficiency and accuracy may be increased.

As described above, the antenna pattern encloses the coil pattern, whereby, even in the case of using a 125 kHz band as a contactless power transmission frequency, even a low frequency antenna such as the NFC or RFID antenna using 13.56 MHz may be implemented together with the contactless power receiver.

According to the embodiment of the present invention, the antenna module 200 may be disposed over or under the contactless power receiver 300 and be mounted in the case 400 in a scheme in which it is attached to the case 400, similar to the contactless power receiver 300.

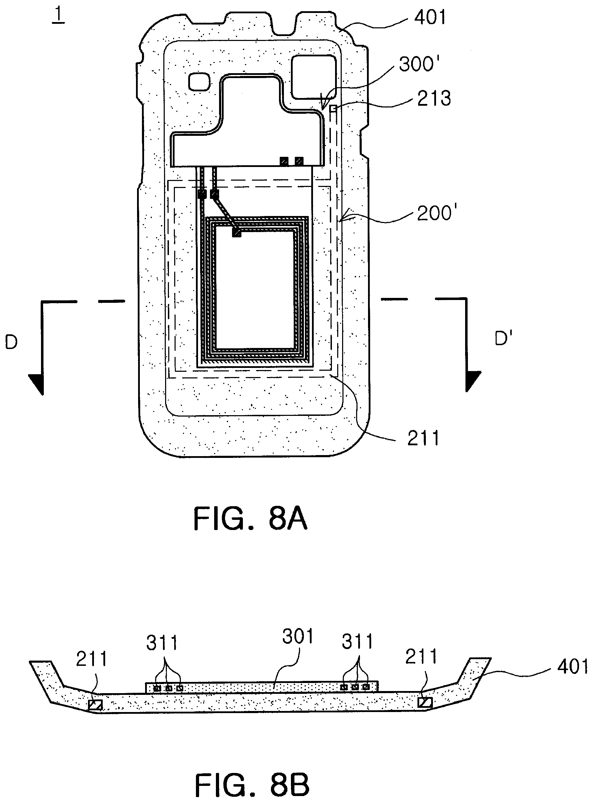

Referring to FIGS. 8A and 8B, according to another embodiment of the present invention, an outer case 401 having an antenna module 200' embedded therein may be prepared. In addition, a contactless power receiver 300' may be attached to the outer case 401.

According to this embodiment of the present invention, the antenna module 200' may be an in-mold antenna (IMA) insert-molded into the outer case 401. In this case, the antenna module 200' is buried in the outer case 401, such that an inner space of the electronic device may be maximized, and the contactless power receiver 300' is attached to an outer portion thereof, such that the electronic device 1 may be assembled in a simple scheme.

According to the embodiment of the present invention, since the contactless power receiver and the low frequency band antenna may be integrally formed in the case, an antenna space problem may be easily solved. Therefore, the electronic device can be slim.

Referring to FIG. 8B, which is a cross-sectional view taken along line D-D' of FIG. 8A, an antenna pattern 211 of the antenna module 200' may enclose the coil pattern 311 of the contactless power receiver. Therefore, interference between the antenna module 200' and the contactless power receiver 300' may be minimized.

According to the embodiments of the present invention, the case 400 or 401 may be an outer case frame or a battery case frame of the electronic device 1. Therefore, the contactless power receiver 300 or 300' and the antenna module 200 or 200' are attached to or insert-molded into the outer case frame or the battery case frame, whereby the electronic device including the contactless power receiver and the antenna module mounted therein may be provided.

The contactless power transmission device and the electronic device having the same described above are not limited to the above-mentioned embodiments but may be variously applied. For example, although the above-mentioned embodiments have described the case in which the contact pads of the coil part are exposed toward a surface opposite to a surface facing the magnetic part, by way of example, the contact pads may be exposed toward the surface facing the magnetic part, as needed. In this case, the connection part may be interposed between the magnetic part and the coil part.

In addition, although the above-mentioned embodiments have described the case in which the contactless power receiver is used in the electronic device by way of example, the invention is not limited thereto, but may be widely used in all electronic devices capable of being used by charging power therein and all power transmission devices capable of transmitting power.

As set forth above, in a contactless power transmission device and an electronic device having the same according to embodiments of the present invention, a coil is formed in a pattern form on a thin film substrate, whereby the thicknesses of the contactless power transmission device and the electronic device having the same may be minimized.

In addition, in the contactless power transmission device according to embodiments of the present invention, a coil unit and a circuit unit are integrally formed in a single package, whereby the contactless power transmission device may be mounted in the electronic device using a simple method without performing a separate connection process.

The contactless power transmission device according to embodiments of the present invention is manufactured and sold in an integrally formed single package state, whereby movement and conveyance of a product may become convenient.

Further, the contactless power transmission device according to embodiments of the present invention is manufactured in a flexible film form, whereby it may be easily attached even to a case having a curved shape and be used in various formes of electronic devices regardless of a shape thereof.

Moreover, in a contactless power transmission device according to embodiments of the present invention, a coil part includes a single coil pattern formed by a plurality of coil strands connected in parallel with each other, whereby an effect of using a coil in a twisted pair wire form (for example, Litz wire, or the like) formed by twisting several strands of electrical wires may be induced. Therefore, loss (for example, an AC resistance value, or the like) generated due to an eddy current, a skin effect, and the like at a low frequency, may be minimized.

Furthermore, the contactless power transmission device and the antenna module according to embodiments of the present invention are disposed so as to minimize interference therebetween, whereby power transmission efficiency and frequency reception efficiency of the electronice device may be improved.

While the present invention has been shown and described in connection with the embodiments, it will be apparent to those skilled in the art that modifications and variations can be made without departing from the scope of the invention as defined by the appended claims.

## Claims

1. A contactless power transmission device comprising:
a flexible substrate (112);
a coil unit (310) including a coil part (110) formed to have a wiring pattern form and having a plurality of coil strands (115a - 115e) connected in parallel with each other to thereby form a single coil pattern (115) ; and **characterised in that** the contactless power transmission device further comprises:
a circuit unit (320) electrically connected to the coil unit (310) and processing power received through the coil unit (310),
wherein the coil unit (310) and the circuit unit (320) are integrally formed in the flexible substrate (112);
wherein the plurality of coil strands (115a to 115e) are formed on one surface of the substrate, and wherein each of the coil strands (115a to 115e) are disposed to be spaced apart from other coil strands (115a to 115e) at predetermined intervals.

2. The contactless power transmission device of claim 1, wherein the flexible substrate (112) is a film type or thin type printed circuit board.

3. The contactless power transmission device of claim 1, wherein the coil unit (310) further includes a plate-shaped magnetic part (120) having a magnetic path formed therein and having the coil pattern (115) attached to one surface thereof.

4. The contactless power transmission device of claim 3, further comprising an adhesion part (140) interposed between the magnetic part (120) and the coil part (310) to thereby adhere the magnetic part (120) and the coil part (310) to each other.

5. The contactless power transmission device of claim 1, wherein the coil unit (310) includes the coil pattern (115) formed on at least one of both surfaces of the flexible substrate (112), and
the coil pattern (115) includes contact pads (315, 317) formed at both ends thereof so as to be electrically connected to the circuit unit (320).

6. The contactless power transmission device of claim 1, wherein the circuit unit (320) includes exposed pads (321, 323) formed therein so as to be electrically connected to a battery (12).

7. The contactless power transmission device of claim 5, wherein the coil part (110) includes the coil strands (115a - 115e) each formed to have the same shape on both surfaces of the flexible substrate (112).

8. The contactless power transmission device of claim 5, wherein the flexible substrate (112) includes conductive vias (119) formed at positions at which ends of the coil strands (115a - 115e) are disposed, and
the coil strands (115a - 115e) formed on both surfaces of the flexible substrate are electrically connected to each other by the conductive vias (119).

9. An electronic device (10) comprising:
the contactless power transmission device of claim 1; and
a case (11) receiving the contactless power transmission device therein.

10. The electronic device (10) of claim 9, wherein the contactless power transmission device is directly attached to an inner portion of the case (11) or is disposed to be maximally adjacent thereto.

11. The electronic device (10) of claim 9, wherein the contactless power transmission device is attached to the case (11) using an adhesive or a double sided tape.

12. The electronic device (10) of claim 9, further comprising an antenna module (200) including an antenna pattern enclosing the coil pattern (115) of the contactless power transmission device.

13. The electronic device (10) of claim 12, wherein the antenna module (200) is attached to the case (11), together with

## Patentansprüche

1. Kontaktlose Stromübertragungsvorrichtung, umfassend:
ein flexibles Substrat (112);
eine Spuleneinheit (310) umfassend einen Spulenteil (110), der so ausgebildet ist, dass er eine Verdrahtungsmusterform und mehrere Spulenstränge (115a - 115e) aufweist, die parallel miteinander verbunden sind, um dadurch ein einzelnes Spulenmuster (115) zu bilden; und
**dadurch gekennzeichnet, dass** die kontaktlose Stromübertragungsvorrichtung ferner umfasst:
eine Schaltungseinheit (320), die elektrisch mit der Spuleneinheit (310) verbunden ist, und Strom, der durch die Spuleneinheit (310) erhalten wird, verarbeitet, wobei die Spuleneinheit (310) und die Schaltungseinheit (320) integral in dem flexiblen Substrat (112) ausgebildet sind;
wobei die mehreren Spulenstränge (115a bis 115e) auf einer Oberfläche des Substrats ausgebildet sind und wobei jeder der Spulenstränge (115a bis 115e) in vorbestimmten Abständen von den anderen Spulensträngen (115a bis 115e) beabstandet angeordnet ist.

2. Kontaktlose Stromübertragungsvorrichtung nach Anspruch 1, wobei das flexible Substrat (112) eine gedruckte Leiterplatte vom Filmtyp oder flachen Typ ist.

3. Kontaktlose Stromübertragungsvorrichtung nach Anspruch 1, wobei die Spuleneinheit (310) ferner einen plattenförmigen magnetischen Teil (120) umfassend einen darin ausgebildeten Magnetpfad und umfassend das an seiner Oberfläche angebrachte Spulenmuster (115) aufweist.

4. Kontaktlose Stromübertragungsvorrichtung nach Anspruch 3, die ferner einen Haftteil (140) umfasst, der zwischen dem magnetischen Teil (120) und dem Spulenteil (310) angeordnet ist, damit der magnetische Teil (120) und der Spulenteil (310) aneinander haften.

5. Kontaktlose Stromübertragungsvorrichtung nach Anspruch 1, wobei die Spuleneinheit (310) das Spulenmuster (115) umfasst, das auf mindestens einer der beiden Oberflächen des flexiblen Substrats (112) ausgebildet ist, und das Spulenmuster (115) Kontaktstellen (315, 317) umfasst, die an beiden Enden davon ausgebildet sind, um elektrisch mit der Schaltungseinheit (320) verbunden zu sein.

6. Kontaktlose Stromübertragungsvorrichtung nach Anspruch 1, wobei die Schaltungseinheit (320) freigelegte Kontaktstellen (321, 323) umfasst, die darin ausgebildet sind, um elektrisch mit einer Batterie (12) verbunden zu werden.

7. Kontaktlose Stromübertragungsvorrichtung nach Anspruch 5, wobei der Spulenteil (110) die Spulenstränge (115a - 115e) umfasst, die jeweils so geformt sind, dass sie auf den beiden Oberflächen des flexiblen Substrats (112) dieselbe Form haben.

8. Kontaktlose Stromübertragungsvorrichtung nach Anspruch 5, wobei das flexible Substrat (112) leitende Durchgänge (119) umfasst, die an Positionen ausgebildet sind, an deren Enden Spulenstränge (115a - 115e) angeordnet sind, und die Spulenstränge (115a - 115e), die auf den beiden Oberflächen des flexiblen Substrats ausgebildet sind, durch die leitenden Durchgänge (119) elektrisch miteinander verbunden sind.

9. Elektronische Vorrichtung (10), umfassend:
kontaktlose Stromübertragungsvorrichtung nach Anspruch 1; und
ein Gehäuse (11), in dem die kontaktlose Stromübertragungsvorrichtung aufgenommen ist.

10. Elektronische Vorrichtung (10) nach Anspruch 9, wobei die kontaktlose Stromübertragungsvorrichtung direkt an einem inneren Abschnitt des Gehäuses (11) angebracht ist oder in nächster Nähe dazu angeordnet ist.

11. Elektronische Vorrichtung (10) nach Anspruch 9, wobei die kontaktlose Stromübertragungsvorrichtung mit einem Klebstoff oder einem doppelseitigen Klebeband an dem Gehäuse (11) befestigt ist.

12. Elektronische Vorrichtung (10) nach Anspruch 9, die ferner ein Antennenmodul (200) umfassend ein Antennenmuster umfasst, welches das Spulenmuster (115) der kontaktlosen Stromübertragungsvorrichtung umfasst.

13. Elektronische Vorrichtung (10) nach Anspruch 12, wobei das Antennenmodul (200) zusammen mit der kontaktlosen Stromübertragungsvorrichtung an dem Gehäuse (11) angebracht ist.

14. Elektronische Vorrichtung (10) nach Anspruch 9, wobei das Gehäuse ein äußerer Gehäuserahmen oder ein Batteriegehäuserahmen ist.

15. Elektronische Vorrichtung (10) nach Anspruch 9, ferner umfassend eine Batterie (12), welche Strom speichert, der in der kontaktlosen Stromübertragungsvorrichtung erzeugt wurde.

## Revendications

1. Dispositif de transmission d'énergie sans fil comprenant :
un substrat flexible (112) ;
une unité de bobine (310) comprenant une partie de bobine (110) formée pour avoir l'aspect d'un motif de câblage et ayant une pluralité de fils de bobine (115a à 115e) connectés en parallèle les uns aux autres pour ainsi former un seul motif de bobine (115) ; et
**caractérisé en ce que** le dispositif de transmission d'énergie sans fil comprend en outre :
une unité de circuit (320) connectée électriquement à l'unité de bobine (310) qui traite l'énergie reçue par l'unité de bobine (310), dans laquelle l'unité de bobine (310) et l'unité de circuit (320) sont intégralement formées dans le substrat flexible (112) ;
dans lequel la pluralité de fils de bobine (115a à 115e) sont formés sur une surface du substrat, et dans lequel chacun des fils de bobine (115a à 115e) est disposé de manière à être espacé des autres fils de bobine (115a à 115e) selon des intervalles prédéterminés.

2. Dispositif de transmission d'énergie sans fil selon la revendication 1, dans lequel le substrat flexible (112) est une carte de circuit imprimé de type film ou mince.

3. Dispositif de transmission d'énergie sans fil selon la revendication 1, dans lequel l'unité de bobine (310) comprend en outre une partie magnétique en forme de plaque (120) dans laquelle un chemin magnétique est formé et le motif de bobine (115) est fixé à une surface.

4. Dispositif de transmission d'énergie sans fil selon la revendication 3, comprenant en outre une partie d'adhérence (140) intercalée entre la partie magnétique (120) et la partie de bobine (310) pour ainsi coller la partie magnétique (120) et la partie de bobine (310) autre.

5. Dispositif de transmission d'énergie sans fil selon la revendication 1, dans lequel l'unité de bobine (310) comprend le motif de bobine (115) formé sur au moins l'une des deux surfaces du substrat flexible (112), et le motif de bobine (115) comprend des surfaces de contact (315, 317) formées à leurs deux extrémités de manière à être connectées électriquement à l'unité de circuit (320).

6. Dispositif de transmission d'énergie sans fil selon la revendication 1, dans lequel l'unité de circuit (320) comprend des surfaces exposées (321, 323) formées à l'intérieur de manière à être connectées électriquement à une batterie (12).

7. Dispositif de transmission d'énergie sans fil selon la revendication 5, dans lequel la partie de bobine (110) comprend les fils de bobine (115a à 115e) formés chacun pour avoir la même forme sur les deux surfaces du substrat flexible (112).

8. Dispositif de transmission d'énergie sans fil selon la revendication 5, dans lequel le substrat flexible (112) comprend des vias conducteurs (119) formés à des positions dans lesquelles les extrémités des fils de la bobine (115a à 115e) sont disposées, et les fils de la bobine (115a à 115e) formés sur les deux surfaces du substrat flexible sont reliés électriquement l'un à l'autre par les vias conducteurs (119).

9. Dispositif électronique (10) comprenant :
le dispositif de transmission d'énergie sans fil cité dans la revendication 1 ; et
un boîtier (11) recevant le dispositif de transmission d'énergie sans fil.

10. Dispositif électronique (10) selon la revendication 9, dans lequel le dispositif de transmission d'énergie sans fil est directement fixé à une partie interne du boîtier (11) ou est disposé de manière à lui être adjacent au maximum.

11. Dispositif électronique (10) selon la revendication 9, dans lequel le dispositif de transmission d'énergie sans fil est fixé au boîtier (11) à l'aide d'un adhésif ou d'un ruban adhésif double face.

12. Dispositif électronique (10) selon la revendication 9, comprenant en outre un module d'antenne (200) qui inclut un motif d'antenne entourant le motif de bobine (115) du dispositif de transmission d'énergie sans fil.

13. Dispositif électronique (10) selon la revendication 12, dans lequel le module d'antenne (200) est fixé au boîtier (11), avec le dispositif de transmission d'énergie sans fil.

14. Dispositif électronique (10) selon la revendication 9, dans lequel le boîtier est un encadrement de boîtier extérieur ou un encadrement de boîtier de batterie.

15. Dispositif électronique (10) selon la revendication 9, comprenant en outre une batterie (12) stockant de l'énergie générée dans le dispositif de transmission d'énergie sans fil.
